# EUROPÄISCHE PATENTSCHRIFT

(11) **EP 4 002 618 B1**
(45) Veröffentlichungstag und Bekanntmachung des Hinweises auf die Patenterteilung: **11.10.2023**
(21) Anmeldenummer: 21208901.5
(22) Anmeldetag: 18.11.2021
(51) Int. Cl.: H02G 3/14, H02G 3/18

(54) **UNTERFLURINSTALLATIONSDOSE**
UNDERFLOOR INSTALLATION BOX
BOÎTE D'INSTALLATION SOUTERRAIN

(30) Priorität: 23.11.2020 DE 202020106720 U
(43) Veröffentlichungstag der Anmeldung: 25.05.2022
(73) Patentinhaber: OBO Bettermann Hungary Kft., 2347 Bugyi (HU)
(72) Erfinder: Herzig, Markus, 51643 Gummersbach (DE)
(74) Vertreter: Haverkamp Patentanwälte PartG mbB

(56) Entgegenhaltungen:
- DE-A1-102014 101 505
- KR-A- 20180 129 402
- US-A- 4 688 491
- US-A1- 2009 159 308
- US-A1- 2009 211 778

## Beschreibung

Die Erfindung betrifft einen Deckel für eine Unterflurinstallationsdose zur Aufnahme von elektrischen/elektronischen Installationen, welcher Deckel einen Schnurauslass aufweist, dessen Schnurauslassöffnung bei Nichtbenutzung durch ein Verschlusselement und bei Benutzung zumindest teilweise mit einer eine oder mehrere Leitungen durchlassenden flexiblen Schnurauslassfüllung verschließbar ist.

Installationsdosen für elektrische/elektronische Installationen, beispielsweise Steckdosen und dergleichen, werden für die Unterflurinstallation benötigt. Bei einer solchen Unterflurinstallation kann es sich um einen Einbau der Installationsdose in einen Hohlboden oder in einen Estrich handeln. Installationsdosen mit einem einen Schnurauslass aufweisenden Deckel werden an denjenigen Positionen eines Kabelkanalsystems, in das die Installationsdose eingeschaltet ist, angeordnet, an denen ein Zugang zu elektrischen/elektronischen Installationen erforderlich ist, beispielsweise der Zugang zu Steckdosen für die Stromversorgung elektrischer Geräte oder auch Anschlussdosen eines Datenkommunikationsnetzwerkes. Installationsdosen dieser Art verfügen vielfach über einen verstellbaren Schnurauslass, durch den die Schnurauslassöffnung des Deckels verschlossen ist, wenn aus der Installationsdose keine Leitung herausgeführt werden soll. In der anderen Stellung ist der Schnurauslass gegenüber dem oberen Abschluss des Deckels aufgeschwenkt oder angehoben, sodass dann durch die bereitgestellte Schnurauslassöffnung Leitungen oder Kabel aus der Installationsdose heraus- bzw. in diese hineingeführt werden können.

In DE 10 2014 101 505 A1 ist eine Installationsdose für eine Unterflurinstallation offenbart, bei der ein Verschlusselement deckelseitig verschwenkbar angelenkt ist, um aus seiner Benutzungsstellung, wenn dieses die Schnurauslassöffnung des Deckels verschließt, in eine Nichtbenutzungsstellung in Richtung zur Deckelinnenseite hin verschwenkt zu werden. Dann ist die Schnurauslassöffnung des Deckels nicht verschlossen. Bei zugeklapptem Deckel befindet sich unterhalb desselben, mit seiner Schnurauslassöffnung fluchtend, an dem Rahmen der Installationsdose eine flexible Schnurauslassfüllung, die beispielsweise als Bürstenleiste ausgeführt sein kann. Durch die Borsten der Bürstenleiste ist die Schnurauslassöffnung verschlossen. Eine aus der Installationsdose herauszuführende Leitung durchgreift die flexiblen Borsten der Bürstenreihe, die sich an die herausgeführte Leitung anschmiegen, sodass durch diese die übrige Schnurauslassöffnung gegenüber einem Eindringen von Staub oder anderweitigen Verunreinigungen in die Installationsdose verschlossen ist. Vorteilhaft bei dieser Installationsdose ist, dass auch bei einer Leitungsherausführung aus der Installationsdose von der Deckeloberseite keine feststehenden Deckelbestandteile abragen und damit eine Stolpergefahr vermieden ist. Bei dieser vorbekannten Installationsdose ist eine Positionierung des Deckels an der Installationsdose bzw. deren Rahmen nur in einer einzigen Stellung möglich, da die Schnurauslassöffnung an derjenigen Seite der Installationsdose bzw. ihres Rahmens angeordnet sein muss, an der sich die installationsdosenseitig gehaltene flexible Schnurauslassfüllung befindet. Insofern ist es erforderlich, dass der Deckel und die Installationsdose nicht nur bezüglich ihrer Bemaßung aufeinander abgestimmt sind.

Aus US 2003/0178421 A1 ist eine weitere Installationsdose mit einem Deckel zum Verschließen seiner oberseitigen Montageöffnung bekannt. Dieser Deckel verfügt an der seinem gelenkigen Anschluss gegenüberliegenden Seite über einen Schnurauslass. Dieser ist durch ein schwenkbar daran angelenktes Verschlusselement daran gehalten. Bei Nichtgebrauch des Schnurauslasses ist das Verschlusselement eingeklappt und fluchtet mit seiner Außenseite mit der übrigen Außenseite des Deckels. Bei Benutzung des Schnurauslasses zum Auslassen ein oder mehrerer Leitungen ist das Verschlusselement entsprechend aufgeklappt. Um Beschädigungen an den aus dem Schnurauslass herausgeführten Leitungen zu vermeiden, ist das Verschlusselement innenseitig mit einem nachgiebigen Material ausgestattet.

KR 2018 0129402 A offenbart eine Unterflurinstallationsdose. In der Installationsdose befindet sich eine Trägerstruktur mit einem von dieser in Richtung zu einem Deckel abragenden, rohrförmigen elastischen Element. An dieses ist ein Deckel angeschlossen, der umfänglich auf einem Flansch eines Rahmenteils aufsitzt. Aufgrund des Anschlusses an das elastische Element ist dieser in Umfangsrichtung drehbar. Die Oberseite des Rahmenteils ist bündig mit der angrenzenden Oberfläche eines Bodens montiert. Infolge der drehbaren Anordnung des Deckels gegenüber dem Dosenkörper können die in dem Deckel enthaltenen Schnurauslassöffnungen in diejenige Richtung gedreht werden, in die der Schnurauslass erfolgen soll. Jeder Schnurauslassöffnung ist ein Verschlusskörper zugeordnet. Der Verschlusskörper verfügt über ein Verschlusselement und eine Schnürauslasshaube. Ein solcher Verschlusskörper kann an dem Deckel entweder in einer Stellung zum Verschließen der Schnurauslassöffnung oder zum Auslassen eines Kabels mit seiner Schnurauslasshaube in der Schnurauslassöffnung montiert werden. Im ersteren Fall befindet sich das Verschlusselement in der Schnurauslassöffnung. Im letzteren Fall befindet sich die Schnurauslasshaube oberhalb der Schnurauslassöffnung. Die Schnurauslasshaube ragt von der Oberseite des Deckels ab und dient zur Leitungsführung, damit eine daraus herausgeführte Leitung in radialer Richtung von der Unterflurinstallationsdose weggeführt wird.

In US 2009/0159308 A1 ist eine weitere Unterflurinstallationsdose mit einem Deckel beschrieben. Gemäß einer darin beschriebenen Ausgestaltung ist der Deckel schwenkbar an dem Dosenkörper angelenkt. In den Eckbereichen der im Querschnitt dreieckförmig ausgelegten Unterflurinstallationsdose befinden sich Schnurauslassöffnungen. Diese sind jeweils durch einen Klappdeckel verschließbar. Werden Leitungen durch eine solche Schnurauslassöffnung herausgeführt, befindet sich der Deckel in seiner Offenstellung, und zwar aufgeschwenkt, damit dieser zur Anlage an der Oberseite des Deckels gelangt. Zur Aufnahme des schwenkbaren Verschlusselementes ist innerhalb des Deckels eine Vertiefung vorgesehen.

US 4,688,491 A offenbart einen Schnurauslass an der Oberfläche eines Arbeitstisches. Dieser Schnurauslass verfügt über einen Deckel mit einer Schnurauslassöffnung, die mit einem gegenüber dem Deckel verschiebbaren Verschlusselement bei Nichtbenutzung verschließbar ist. Ausgehend von diesem diskutierten Stand der Technik liegt der Erfindung daher die Aufgabe zugrunde, eine Unterflurinstallationsdose vorzuschlagen, die hinsichtlich ihrer Einsatzmöglichkeiten flexibler ist.

Gelöst wird diese Aufgabe erfindungsgemäß durch eine Unterflurinstallationsdose mit den Merkmalen des Anspruchs 1.

Der Deckel dieser Unterflurinstallationsdose verfügt über einen Verschlusskörper. Der Verschlusskörper umfasst das Verschlusselement und die flexible Schnurauslassfüllung. Dabei sind das Verschlusselement zum Verschließen der typischerweise randlich am Deckel angeordnete Schnurauslassöffnung und die flexible Schnurauslassfüllung so zueinander angeordnet, dass der Verschlusskörper wahlweise mit seinem Verschlusselement oder seiner flexiblen Schnurauslassfüllung in der Schnurauslassöffnung des Deckels angeordnet werden kann. Der Verschlusskörper kann somit in zwei unterschiedlichen Stellungen am Deckel gehalten sein. Wenn kein Leitungsauslass gewünscht wird, wird der Verschlusskörper am Deckel angeordnet, damit sein Verschlusselement die Schnurauslassöffnung verschließt. In einer zweiten Stellung des Verschlusskörpers am Deckel ist in der Schnurauslassöffnung des Verschlusskörpers die flexible Schnurauslassfüllung angeordnet. Somit kann ein solcher Verschlusskörper in zwei unterschiedlichen Benutzungsstellungen in Bezug auf eine Füllung der Schnurauslassöffnung am Deckelteil angeordnet werden.

Auch wenn Ausgestaltungen möglich sind, bei denen der Verschlusskörper beispielsweise um eine vertikale Achse verschwenkbar am Deckel gehalten sein kann, um je nach gewünschter Benutzung das Verschlusselement oder die flexible Schnurauslassfüllung innerhalb der Schnurauslassöffnung anzuordnen, ist vorgesehen, dass der Verschlusskörper ein von dem Deckel lösbares Teil ist. Dieser kann dann je nach der gewünschten Art seiner Verwendung, und zwar entweder dass sein Verschlusselement oder seine flexible Schnurauslassfüllung innerhalb der Schnurauslassöffnung des Deckels angeordnet werden soll, am Deckel montiert werden. Dementsprechend wird die Raumlage des Verschlusskörpers bei seiner Montage am Deckel gewählt. Vorgesehen ist, dass für die Montage des Verschlusskörpers am Deckel der Deckel innenseitig zwei Führungskulissen aufweist, in die der Verschlusskörper eingeführt und in denen er gehalten ist. Zu diesem Zweck verfügt der Verschlusskörper über entsprechende Führungsleisten, die zum Halten des Verschlusskörpers am Deckel in die deckelseitigen Führungskulissen eingreifen. Die Führungsleisten sind aus den Führungskulissen herausziehbar, damit der Verschlusskörper in der für die gewünschte Verwendung vorgesehenen Orientierung mit seinen Führungsleisten in die Führungskulisse eingeführt werden kann.

Da der Verschlusskörper am Deckel der Installationsdose angeordnet ist, kann dieser in beliebiger Orientierung zu der eigentlichen Installationsdose bzw. ihrem Rahmen angeordnet werden. Dieses erlaubt somit eine Änderung der Schnurauslassseite auch nach bereits erfolgter Installation der Installationsdose. Da der Schnurauslass dieses Deckels mit den beiden Elementen - Verschlusselement sowie flexible Schnurauslassfüllung - allein mit dem deckelseitig gehaltenen Verschlusskörper verschließbar ist, kann dieser Deckel an beliebige Installationsdosen bzw. deren Rahmenteile angeschlossen oder zum Verschließen derselben eingesetzt werden. Die Installationsdose braucht daher keine besonderen Gestaltungsmerkmale aufweisen, damit ihre Installationsöffnung mit einem Deckel der vorbeschriebenen Art bestimmungsgemäß verschlossen werden kann. Hierdurch ist die Anwendungsvielfalt des erfindungsgemäßen Deckelteils nicht unbeträchtlich verbessert.

Damit die beiden Elemente des Verschlusskörpers - das Verschlusselement sowie die flexible Schnurauslassfüllung - sich bei der jeweiligen Verwendung nicht behindern, ist vorgesehen, dass das Verschlusselement und die flexible Schnurauslassfüllung in zwei unterschiedlichen Ebenen und versetzt zueinander angeordnet sind. Zum Eingriff in die deckelseitigen Führungskulissen trägt jedes der beiden Elemente zwei solcher Führungsleisten. Durch simples Wenden des Verschlusskörpers kann das jeweils gewünschte Element mit seinen Führungsleisten in die deckelseitigen Führungskulissen eingesetzt und damit zum Verschließen der Schnurauslassöffnung positioniert werden. Das bei einer Anwendung jeweils nicht genutzte Element befindet sich dann deckelinnenseitig benachbart zu der Schnurauslassöffnung. Das Anordnen der beiden Elemente in zwei Ebenen erlaubt eine Verwendung eines Deckels mit einer oberseitigen Vertiefung zum Einsetzen eines Designelementes, beispielsweise einer Metallplatte, einer Teppichfliese oder eines andersartigen Bodenbelages, wie dieser beispielsweise benachbart zu der Installationsdose verlegt ist. Bei Deckeln ohne eine solche vertiefte außenseitige Aufnahme brauchen die beiden Elemente des Verschlusskörpers nicht in zwei unterschiedlichen Ebenen angeordnet zu sein.

Das Verschlusselement selbst kann ein plattenartiges Element sein, welches an der Innenseite des Deckels, die Schnurauslassöffnung überspannend, anliegt. In einer bevorzugten Ausgestaltung ist vorgesehen, dass das Verschlusselement ein in die Schnurauslassöffnung eingreifendes und diese ausfüllendes Füllstück trägt. Bei diesem kann es sich ebenfalls um einen Bodenbelagsabschnitt handeln.

Vorzugsweise ist der Verschlusskörper in seiner Benutzungsstellung deckelseitig fixiert. Hierfür bietet es sich an, die Fixierung als Rastfixierung auszulegen. Eine solche Fixierung vermittelt einem Benutzer zugleich eine haptische Rückmeldung, wenn der Verschlusskörper sich in der jeweiligen Benutzungsstellung befindet. Zur Rastfixierung können bei einer Ausgestaltung des Verschlusskörpers mit Führungsleisten diese genutzt werden, um zumindest an einer dieser Führungsleisten einen Rastnocken anzuformen. Dieser greift, wenn die Benutzungsstellung erreicht ist, in eine Rastnockenfalle der Führungskulisse ein oder hintergreift die Führungskulisse für die gewünschte Fixierung.

In aller Regel wird die Montagebewegung zum Einsetzen des Verschlusskörpers in die ein oder andere Benutzungsstellung anschlagbegrenzt sein.

Nachfolgend ist die Erfindung anhand eines Ausführungsbeispiels unter Bezugnahme auf die beigefügten Figuren beschrieben. Es zeigen:
- **Fig. 1:**: Einen Deckel für eine Installationsdose in einer perspektivischen Darstellung für elektrische/elektronische Unterflurinstallationen in einer ersten Benutzungseinrichtung,
- **Fig. 2:**: der Deckel der Figur 1 in einer Teildarstellung in einer Perspektive auf seine Deckelinnenseite,
- **Fig. 3:**: der Deckel der vorstehenden Figuren mit vollständig geöffnetem Schnurauslass,
- **Fig. 4:**: ein zum Verschließen des Schnurauslasses in den Figuren 1 und 2 des Deckels eingesetzter Verschlusskörper in einer ersten Raumlage,
- **Fig. 5:**: der zum Verschließen des Schnurauslasses in den Figuren 1 und 2 des Deckels eingesetzte Verschlusskörper in seiner für eine zweite Benutzung vorgesehenen Raumlage,
- **Fig. 6:**: der Deckel, dargestellt wie in Figur 1, mit seinem Verschlusskörper in der anderen, einen Leitungsauslass ermöglichenden Benutzungsstellung und
- **Fig. 7:**: eine perspektivische Ansicht des Deckels der Figur 6 auf seine Deckelinnenseite.

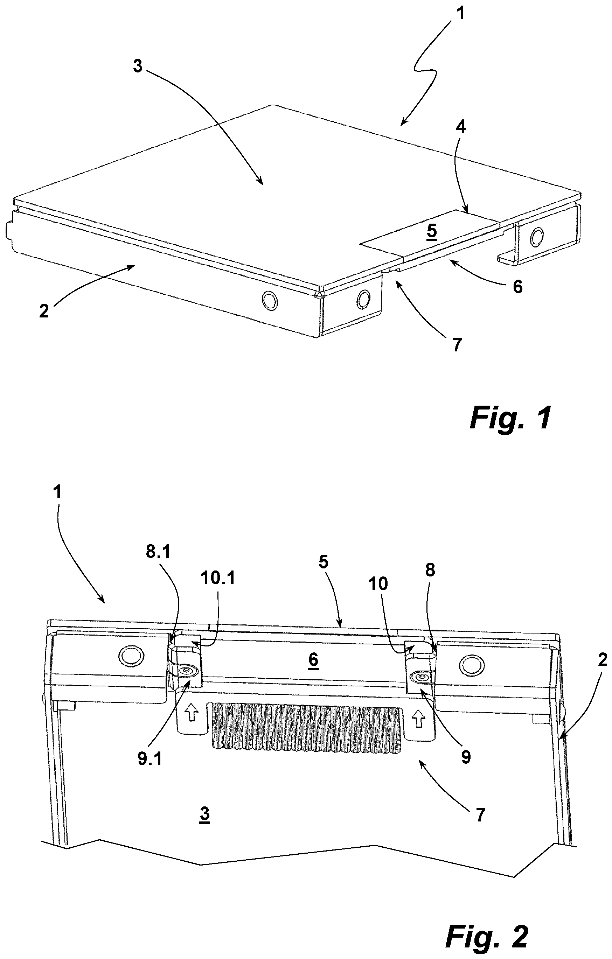

Ein Deckel 1 für bzw. als Teil einer in den Figuren nicht näher dargestellten Unterflurinstallationsdose umfasst einen Deckelrahmen 2 und eine seinen oberen Abschluss bildende Deckelplatte 3. In die Deckelplatte 3 des Deckels 1 ist eine von dem Rand der Deckelplatte 3 ausgehende Schnurauslassöffnung 4 eingebracht. In der in Figur 1 gezeigten Ausbildung des Deckels 1 ist die Schnurauslassöffnung 4 durch ein Füllstück 5 eines Verschlusselementes 6 ausgefüllt. Die Oberseite des Füllstückes 5 fluchtet mit der Oberseite der Deckelplatte 3. Das Verschlusselement 6 mit seinem in die Schnurauslassöffnung 4 eingreifenden Füllstück 5 ist Teil eines Verschlusskörpers 7, der, wie aus Figur 2 erkennbar, an der Deckelinnenseite gehalten ist. Zum Halten des Verschlusskörpers 7 sind an der Deckelinnenseite zwei Führungslaschen 8, 8.1 angeordnet. Die Führungslaschen 8, 8.1 verfügen jeweils über einen von der Deckelinnenseite durch eine Verkröpfung beabstandeten Abschnitt 9, 9.1. Der Zwischenraum zwischen der Deckelinnenseite und diesem Abschnitt 9, 9.1 dient als Führungskulisse, in der der Verschlusskörper 7 in der in Figur 2 gezeigten Stellung mit jeweils einer Führungsleiste 10, 10.1 eingreift. Die in Figuren 1 und 2 gezeigte Stellung des Verschlusskörpers 7 ist durch eine Rastung fixiert.

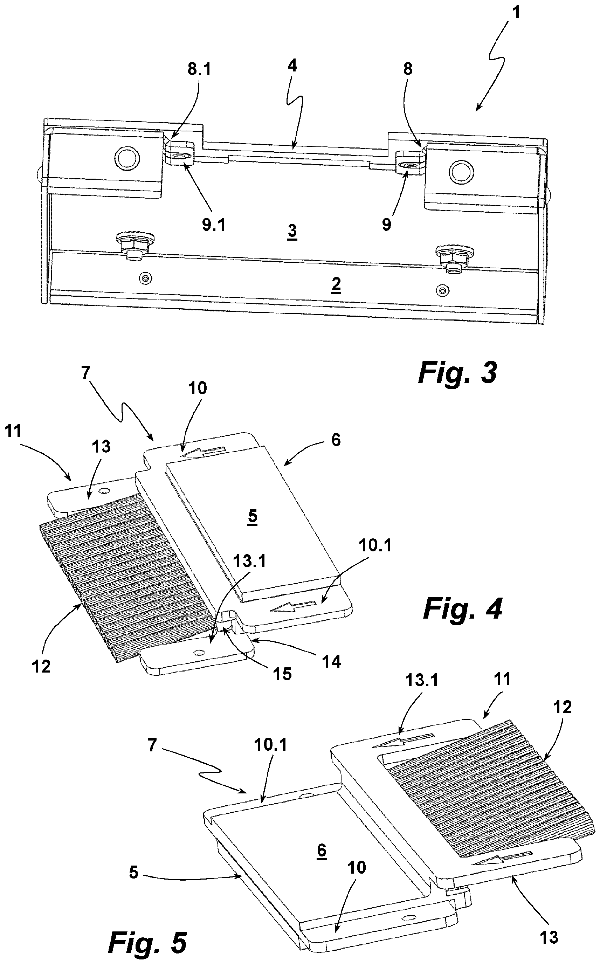

Nach Überwinden des Rastwiderstandes kann der Verschlusskörper 7 von dem Deckel 3 abgenommen bzw. aus der durch die Führungslaschen 8, 8.1 bereitgestellten Führungskulisse herausgezogen werden. Figur 3 zeigt den Deckel 1 in einer perspektivischen Darstellung auf seine Deckelinnenseite mit der unverschlossenen Schnurauslassöffnung 4.

Figur 4 zeigt den von dem Deckel 1 abgenommenen Verschlusskörper 7. Der Verschlusskörper 7 verfügt neben dem bereits beschriebenen Verschlusselement 6 mit seinem Füllstück 5 über eine flexible Schnurauslassfüllung 11. Die Schnurauslassfüllung 11 als zweites für den Verschluss der Schnurauslassöffnung 4 vorgesehenes Element des Verschlusskörpers 7 ist als Bürstenreihe 12 ausgeführt. Die Bürstenreihe 12 erlaubt den Auslass von Leitungen oder dergleichen durch die Schnurauslassöffnung 4 des Deckels, die sodann zwischen den einzelnen Borsten der Bürstenreihe 12 herausgeführt sind. Die flexible Schnurauslassfüllung 11 verfügt ebenso wie das Verschlusselement 6 über zwei Führungsleisten 13, 13.1. Die Führungsleisten 13, 13.1 sind Teil eines einseitig offenen Rahmenstücks 14, von dem die Borstenfassung 15 getragen ist. Die Ebene der Führungsleisten 13, 13.1 der flexiblen Schnurauslassfüllung 11 befindet sich in einer anderen Ebene als die Ebene der Führungsleisten 10, 10.1 des Verschlusselementes 6. Die beiden Elemente des Verschlusskörpers 7 - das Verschlusselement 6 und die flexible Schnurauslassfüllung 11 - sind, wie aus Figur 5 erkennbar, nicht nur in zwei Ebenen, sondern auch gegeneinander versetzt angeordnet. Während Figur 4 die Raumlage des Verschlusskörpers 7 zur Verwendung desselben zum Verschließen des Schnurauslasses 4 des Deckels 1, wie in Figuren 1 und 2 gezeigt, darstellt, ist in Figur 5 der Verschlusskörper 7 gewendet mit der deckelseitigen Führungskulisse in Eingriff gestellt, sodass in dieser Benutzungsstellung die flexible Schnurauslassfüllung 11 sich an derjenigen Position befindet, an der in Figur 4 das Verschlusselement 6 war. Mit dieser Raumlage wird der Verschlusskörper 7 mit seinen Führungsleisten 13, 13.1 in die durch die Führungslaschen 8, 8.1 bereitgestellten Führungskulissen des Deckels 1 eingeschoben, wenn ein Leitungsauslass aus dem Deckel 1 gewünscht wird.

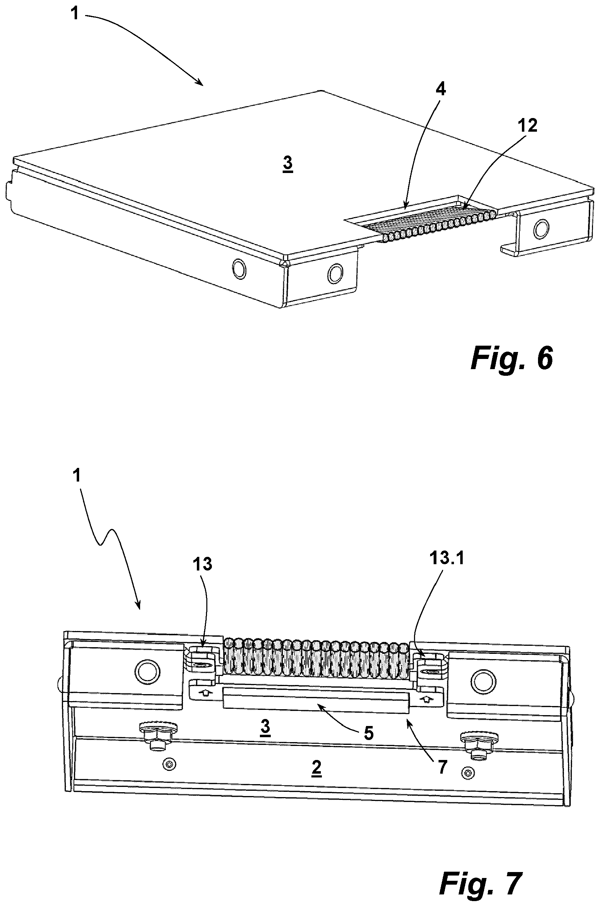

Der auf diese Weise an dem Deckel 1 angeschlossene Verschlusskörper 7 ist in Figur 6 gezeigt. Die Schnurauslassöffnung 7 ist durch die Bürstenreihe 12 verschlossen. Aufgrund der Flexibilität der Borsten der Bürstenreihe 12 können Leitungen durch diese hindurch in eine Installationsdose ein- bzw. aus dieser herausgeführt werden. Die Eingriffsstellung der Führungsleisten 13, 13.1 des Verschlusskörpers 7 in seiner Stellung zum Verschließen der Schnurauslassöffnung 4 durch die Bürstenreihe 12 ist aus Figur 7 zu erkennen.

Zur Erleichterung der Handhabe des Verschlusskörpers 7 hinsichtlich eines bestimmungsgemäßen Anschlusses des Verschlusskörpers 7 an den Deckel 1 sind auf den Oberseiten der Führungsleisten 10, 10.1 bzw. 13, 13.1 Richtungspfeile angebracht, die die translatorische Bewegungsrichtung zeigen, mit der der Verschlusskörper 7 am Deckel 1 zu montieren ist. Da die Führungskulisse durch die Innenseite der Deckelplatte 3 oberseitig begrenzt ist und die Führungslaschen 8, 8.1 mit ihren Abschnitten 9, 9.1 von dem randlichen Abschluss der Deckelplatte 3 beabstandet sind, kann der diesbezüglich von den Führungslaschen 8, 8.1 nicht bedeckte Bereich der Deckelplatte 3 als Montageanschlag für die Führungsleisten 10, 10.1 bzw. 13, 13.1 genutzt werden, wenn diese in die Führungskulissen eingeschoben werden sollen.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten diese umzusetzen, ohne dass dies im Rahmen dieser Ausführungen im Einzelnen näher erläutert werden müsste.

### Bezugszeichenliste

- 1: Deckel
- 2: Deckelrahmen
- 3: Deckelplatte
- 4: Schnurauslassöffnung
- 5: Füllstück
- 6: Verschlusselement
- 7: Verschlusskörper
- 8, 8.1: Führungslasche
- 9, 9.1: Abschnitt
- 10, 10.1: Führungsleiste
- 11: flexible Schnurauslassfüllung
- 12: Bürstenreihe
- 13, 13.1: Führungsleiste
- 14: Rahmenstück
- 15: Borstenfassung

## Patentansprüche

1. Unterflurinstallationsdose zur Aufnahme von elektrischen/elektronischen Installationen mit einem Deckel (1), der einen Schnurauslass aufweist, dessen Schnurauslassöffnung (4) bei Nichtbenutzung durch ein Verschlusselement (6) und bei Benutzung zumindest teilweise mit einer eine oder mehrere Leitungen durchlassenden flexiblen Schnurauslassfüllung (11) verschließbar ist, **dadurch gekennzeichnet, dass** das Verschlusselement (6) und die flexible Schnurauslassfüllung (11) Teil eines deckelseitig gehaltenen Verschlusskörpers (7) sind, der in einer ersten am Deckel gehaltenen Stellung mit seinem Verschlusselement (6) und in einer zweiten am Deckel gehaltenen Stellung mit seiner flexiblen Schnurauslassfüllung (11) in der Schnurauslassöffnung (4) des Deckels (1) anordnenbar ist, dass der Deckel (1) innenseitig zwei Führungskulissen aufweist, in denen der Verschlusskörper (7), mit jeweils einer Führungsleiste (10, 10.1; 13, 13.1) in eine Führungskulisse eingreifend, und indem jedes der beiden Elemente des Verschlusskörpers zwei Führungsleisten trägt, in der einen, in der das Verschlusselement (6) in der Schnurauslassöffnung (4) angeordnet ist, oder der anderen Stellung, in der die flexible Schnurauslassfüllung (11) in der Schnurauslassöffnung (4) angeordnet ist, gehalten ist, dass das Verschlusselement (6) und die Schnurauslassfüllung (11) des Verschlusskörpers (7) in unterschiedlichen Ebenen und mit ihren in ihrer jeweiligen Benutzungsstellung zur Schnurauslassöffnung (4) weisenden Seiten in voneinander wegweisende Richtungen angeordnet sind, und dass das Verschlusselement (6) und die Schnurauslassfüllung (11) versetzt zueinander angeordnet sind.

2. Unterflurinstallationsdose nach Anspruch 1, **dadurch gekennzeichnet, dass** die Führungsleisten (10, 10.1; 13, 13.1) des Verschlusskörpers (7) aus den Führungskulissen herausziehbar sind.

3. Unterflurinstallationsdose nach Anspruch 1 oder 2, **dadurch gekennzeichnet, dass** die Führungskulissen jeweils durch eine an der Deckelinnenseite benachbart zu der Schnurauslassöffnung (4) befindliche, einen durch eine Verkröpfung von der Deckelinnenseite beabstandeten Abschnitt (9, 9.1) aufweisende Führungslasche (8, 8.1) realisiert sind.

4. Unterflurinstallationsdose nach einem der Ansprüche 1 bis 3, **dadurch gekennzeichnet, dass** das Verschlusselement (6) ein in die Schnurauslassöffnung (4) eingreifendes und diese ausfüllendes Füllstück (5) trägt.

5. Unterflurinstallationsdose nach einem der Ansprüche 1 bis 4, **dadurch gekennzeichnet, dass** die flexible Schnurauslassfüllung (11) als Bürstenleiste (12) ausgeführt ist.

6. Unterflurinstallationsdose nach Anspruch 5, **dadurch gekennzeichnet, dass** die Borsten der Bürstenleiste (12) dergestalt geneigt gehalten sind, damit diese mit ihren freien Enden im Wesentlichen mit der Deckeloberseite abschließen.

7. Unterflurinstallationsdose nach einem der Ansprüche 1 bis 6, **dadurch gekennzeichnet, dass** der Verschlusskörper (7) in seinen Benutzungsstellungen am Deckel (1) fixiert ist.

8. Unterflurinstallationsdose nach Anspruch 7, **dadurch gekennzeichnet, dass** der Verschlusskörper (7) durch eine Rastung in seinen Benutzungsstellungen am Deckel (1) fixiert ist.

9. Unterflurinstallationsdose nach Anspruch 8, **dadurch gekennzeichnet, dass** zur Rastfixierung des Verschlusskörpers (7) zumindest einer der beiden in eine Führungskulisse eingreifenden Führungsleisten (10, 10.1; 13, 13.1) einen Rastnocken trägt, der, wenn sich der Verschlusskörper in Benutzungsstellung befindet, in eine Rastnockenfalle der Führungskulisse eingreift oder die Führungskulisse hintergreift.

10. Unterflurinstallationsdose nach einem der Ansprüche 1 bis 9 **dadurch gekennzeichnet, dass** der Deckel (1) schwenkbar an der Unterflurinstallationsdose angelenkt ist.

## Claims

1. Underfloor installation box for receiving electrical/electronic installations, with a cover (1) which comprises a cord outlet, of which the cord outlet opening (4), when not in use, can be closed off by a closure element (6), and when in use can be closed at least partially by means of a flexible cord outlet filling (11) which allows for one or more leads to be passed through, **characterised in that** the closure element (6) and the flexible cord outlet filling (11) are part of a closure body (7) held on the cover side, which, in a first position held on the cover, can be arranged with its closure element (6) in the flexible cord outlet filling (4) of the cover (1), and in a second position held on the cover can be arranged with its flexible cord outlet filling (11) in the cord outlet opening of the cover, that the cover (1) comprises on its inside two guide links, in which the closure body (7) engages in each case into a guide link with a guide strip (10, 10.1,; 13, 13.1), and that each of the two elements of the closure body carries two guide strips, and is held in the one position in which the closure element (6) is arranged in the cord outlet opening (4), or in the other position in which the flexible cord outlet filling (11) is arranged in the cord outlet opening (4), that the closure element (6) and the cord outlet filling (11) of the closure body (7) are arranged on different planes and with their sides pointing towards the cord outlet opening (4) in the respective position of use facing away from one another, and that the closure element (6) and the cord outlet filling (11) are arranged offset to one another.

2. Underfloor installation box according to claim 1, **characterised in that** the guide strips (10, 10.1; 13, 13.1) of the closure body (7) can be drawn out of the guide links.

3. Underfloor installation box according to claim 1 or 2, **characterised in that** the guide strips are in each case formed by a guide plate (8, 8.1), which on the inside of the cover is located adjacent to the cord outlet opening (4) and comprises a section (9, 9.1) which is separated from the inside of the cover by a shoulder piece.

4. Underfloor installation box according to any one of claims 1 to 3, **characterised in that** the closure element (6) carries a filling piece (5) which engages into the cord outlet opening (4) and fills it.

5. Underfloor installation box according to any one of claims 1 to 4, **characterised in that** the flexible cord outlet opening (11) is configured as a brush strip (12).

6. Underfloor installation box according to claim 5, **characterised in that** the bristles of the brush strip (12) are held inclined at an angle in such a way that with their free ends they essentially close off with the upper side of the cover.

7. Underfloor installation box according to any one of claims 1 to 6, **characterised in that,** in its positions of use, the closure body (7) is fixed to the cover (1).

8. Underfloor installation box according to claim 7, **characterised in that** the closure body (7) is fixed to the cover (1) in its positions of use by means of a latch snap engagement.

9. Underfloor installation box according to claim 8, **characterised in that,** for the latch snap fixing of the closure body (7), at least one of the two guide strips (10, 10.1; 13, 13.1) engaging into a guide link carries a latching cam, which, when the closure body is located in the position of use, engages into a latching cam recess, or engages behind the guide link.

10. Underfloor installation box according to any one of claims 1 to 9, **characterised in that** the cover (1) is jointed such as to be capable of pivoting on the underfloor installation box.

## Revendications

1. Boîtier d'installation sous plancher, destiné à loger des installations électriques/électroniques, comprenant un couvercle (1), lequel présente une sortie de cordon, dont l'ouverture (4) de sortie de cordon peut être fermée en cas de non-utilisation par un élément de fermeture (6) et, en cas d'utilisation, peut être fermée, du moins partiellement, par un obturateur (11) souple de sortie de cordon, laissant passer un ou plusieurs câbles, **caractérisé en ce que** l'élément de fermeture (6) et l'obturateur (11) de sortie de cordon font partie d'un corps de fermeture (7) maintenu côté couvercle, lequel peut être disposé dans l'ouverture (4) de sortie de cordon du couvercle (1) dans une première position, maintenu du côté couvercle par l'élément de fermeture (6), et dans une seconde position, maintenu du côté couvercle par son obturateur (11) souple de sortie de cordon, **en ce que** le couvercle (1) présente sur sa face intérieure deux coulisseaux de guidage, dans lesquels le corps de fermeture (7) est maintenu par respectivement une baguette de guidage (10, 10.1 ; 13, 13.1) s'engageant dans un coulisseau de guidage et chacun des deux éléments du corps de fermeture supportant deux baguettes de guidage, dans l'une des positions, dans laquelle l'élément de fermeture (6) est disposé dans l'ouverture (4) de sortie de cordon, ou dans l'autre position, dans laquelle l'obturateur (11) souple de sortie de cordon est disposé dans l'ouverture (4) de sortie de cordon, **en ce que** l'élément de fermeture (6) et l'obturateur (11) souple de sortie de cordon du corps de fermeture (7) sont disposés dans des plans différents et, dans leurs positions d'utilisation respectives, avec leur faces orientées vers l'ouverture (4) de sortie de cordon dans des directions opposées, et **en ce que** l'élément de fermeture (6) et l'obturateur (11) de sortie de cordon sont disposés en quinconce l'un par rapport à l'autre.

2. Boîtier d'installation sous plancher selon la revendication 1, **caractérisé en ce que** les baguettes de guidage (10, 10.1 ; 13, 13.1) du corps de fermeture (7) peuvent être retirées des coulisseaux de guidage.

3. Boîtier d'installation sous plancher selon la revendication 1 ou 2, **caractérisé en ce que** les coulisseaux de guidage sont réalisés respectivement par une patte de guidage (8, 8.1), située sur la face intérieure du couvercle, adjacente à l'ouverture (4) de sortie de cordon, présentant un tronçon (9, 9.1) distancé par un coude de la face intérieure du couvercle.

4. Boîtier d'installation sous plancher selon l'une des revendications 1 à 3, **caractérisé en ce que** l'élément de fermeture (6) supporte un élément obturateur (5) s'engageant dans l'ouverture (4) de sortie de cordon et comblant cette dernière.

5. Boîtier d'installation sous plancher selon l'une des revendications 1 à 4, **caractérisé en ce que** l'obturateur (11) souple de sortie de cordon est conformé en baguette à brosse (12).

6. Boîtier d'installation sous plancher selon la revendication 5, **caractérisé en ce que** les poils de la baguette à brosse (12) sont maintenus inclinés de telle sorte que ceux-ci se terminent par leurs extrémités libres, sensiblement au droit du dessus du couvercle.

7. Boîtier d'installation sous plancher selon l'une des revendications 1 à 6, **caractérisé en ce que** le corps de fermeture (7) est fixé, dans ses positions d'utilisation, sur le couvercle (1).

8. Boîtier d'installation sous plancher selon la revendication 7, **caractérisé en ce que** le corps de fermeture (7) est fixé sur le couvercle dans ses positions d'utilisation par un dispositif d'encliquetage.

9. Boîtier d'installation sous plancher selon la revendication 8, **caractérisé en ce que** pour fixer par encliquetage le corps de fermeture (7), l'une au moins des deux baguettes de guidage (10, 10.1 ; 13, 13.1) s'engageant dans un coulisseau de guidage, supporte un cliquet, lequel s'engage, quand le corps de fermeture se trouve en position d'utilisation, dans un piège à cliquet du coulisseau de guidage ou crochète par l'arrière le coulisseau de guidage.

10. Boîtier d'installation sous plancher selon l'une des revendications 1 à 9, **caractérisé en ce que** le couvercle (1) est articulé de manière basculante au boîtier d'installation sous plancher.
